# EUROPEAN PATENT SPECIFICATION

(11) **EP 3 735 876 B1**
(45) Date of publication and mention of the grant of the patent: **26.07.2023**
(21) Application number: 19173308.8
(22) Date of filing: 08.05.2019
(51) Int. Cl.: A47J 31/46

(54) **COFFEE MACHINE WITH STEAM RELIEF UNIT**
KAFFEEMASCHINE MIT DAMPFABLASSEINHEIT
MACHINE À CAFÉ AVEC UNITÉ DE VENTILATION DE VAPEUR

(43) Date of publication of application: 11.11.2020
(73) Proprietor: BSH Hausgeräte GmbH, 81739 München (DE)
(72) Inventor: Studencnik, Simon, 2390 Ravne na Koroskem (SI); Lemez, Samo, 3327 Smartno ob Paki (SI)

(56) References cited:
- CN-U- 201 905 741
- CN-U- 208 108 554

## Description

The present invention relates to coffee machine, particularly to a fully automatic coffee machine having a water tank, a pump, a heating unit, a brewing unit, a drainage system with a drip tray and a steam relief unit for letting off residual steam and water from the heating unit.

Automatic coffee brewing devices are known in the state of the art and commonly used in restaurants, catering organizations and other high volume food production institutions. Typically, brewing machines have a body with removable water tank for clear water, a pump which delivers the water to the heating source and next to the brewing unit. The beverage brewing substance is infused with pressured heated water to produce a brewed beverage. After finishing the brewing process, there is still a residual steam or water in the coffee machine. With known fluid systems in coffee machines and other hot beverage machines, it is generally desirable to remove any residual water in the heating unit which remains after the coffee extraction or the hot water release. Usually it is achieved by an additional solenoid valve or there is used section of a multi-way valve. After finishing process of brewing or other process with using hot water or steam, a control unit of the coffee machine opening said valve and residual steam and water is relieved to the drainage system and finally to the drip tray. Because of the high pressure and high temperature of the residual steam and water this is very important to provide a user with safe the coffee maker using, another aspect is to reduce the noise during decompressing the steam which directly affects the user's life and the surrounding environment. For that reason known coffee makers uses different steam reliefs, which are usually made out of plastic housing and inner condensation ribs system. The ribs system causes that the steam flow is sopped and the noise is damped, and the steam is changed into water, which is drained to the drip tray.

Document US2004177760 (A1) discloses a hot beverage machine includes a heating unit having a fresh water intake. A fresh water line supplies fresh water to the fresh water intake of the heating unit. A residual fluid line is coupled to the fresh water intake of the heating unit through an on-off valve for conducting fluids to a collection container. A device for letting off residual steam and residual water from the heating unit includes a heat-exchanging and heat-storing condenser having a residual line section coupled to the residual fluid line, a fresh water line section coupled into the fresh water line and a heat storing medium that is connected for conducting heat between the residual line section and the fresh water line section.

Document CN103565278 (B) discloses a pressure relieving device for a coffee machine comprises a capsule supporting plate, a rotary support, a handle, a pressure relief valve assembly, a valve core, a shifting rod and a limitation groove; the rotary support is installed on the capsule supporting plate in an opening and closing mode; the handle is in matched connection with the rotary support; the pressure relief assembly is installed on the capsule supporting plate; the valve core is arranged at one end of the pressure relief valve assembly; the shifting rod is arranged on the handle; the limitation groove is formed in the rotary support; the shifting rod is in matched connection with the limitation groove; when the shifting rod moves to an appropriate angle along with rotation of the handle, the rotary support rotates to be in a close state; when the shifting rod continues to rotate, one end of the handle is abut against the valve core to enable the pressure relief valve assembly to be in a sealing state.

Document CN201905741 (U) discloses the pressure relief device of a coffee machine which comprises a heating pot body which is arranged in a coffee machine body and can be used for preparing steam and hot water, wherein a pressure relief buffering and silencing device is connected into a pressure relief channel on the coffee machine body, is communicated with the pressure relief channel, and comprises a pressure relief box and a pressure relief box cover matched with the pressure relief box. In the utility model, the pressure relief buffering and silencing device is additionally arranged, so that the mixture of steam exhausted from the pressure relief channel and water is led into the pressure relief box, buffered by a first filter core and a second filter core in the pressure relief box and stored in the pressure relief box; when a large amount of mixture of steam and water is accumulated at the upper port of a drain pipe, the mixture is drained from the upper port of the drain pipe; and when the pressure relief work is stopped, remaining accumulated water in the pressure relief box is drained from the lower port of the drain pipe of the pressure relief box, so that the mixture of the steam and water rapidly discharged during pressure relief is discharged after being buffered and silenced.

Known pressure relieving devices comprise complicated structure what generates high production costs. Moreover complicated structure of it can cause increasing failure rate of the device.

The objective of the present invention is to provide a steam relief unit for coffee machine, which is convenient to use, safety and simple in structure, also cost effective in production and assembling, and improves stability of the decompression process and reduces the noise of decompressed a steam/water, improving the comfort.

In accordance with the present invention, there is provided a coffee machine which includes a steam relief unit as defined in claim 1. The coffee machine especially fully automatic coffee machine usually comprises a body with removable the water tank for a fresh water connected to a water tank port and a pump which delivers the water to a heating unit and next to a brewing unit or a discharge nozzle for a hot water, through a multi-way valve. The beverage brewing substance is infused with a pressured heated water to produce a brewed beverage. The excess water formed in the brewing process is collected in a drip tray placed in the lower portion of the coffee machine.

Because of the above mentioned structure of the steam relieve unit, a whole amount of the residual in system of the coffee machine water or steam, which come to the inlet port passes through the filtration element, and the large volume of the filtration element which fills at least 50% of the steam relieve unit chamber, causes that stability of the decompression process and reduction the noise, and reduction temperature of decompressed the steam/water is improved. Also improved structure of the steam and shape comprises a flat surfaces allows producing it by injection molding, what decreases production costs.

In the preferred embodiment the filtration element fills the whole volume of the steam relief unit chamber. The full filling the volume of the steam relief unit chamber by the filtration element additionally improves the reduction of the noise, the temperature is improved.

Advantageously, the steam relief unit chamber is equipped with the filtration element which is made of porous material. Porous structure of the filtration element slowing down the speed of stream of the residual water or steam incoming into the steam relief unit chamber through the inlet port and limits the noise. The filtration element also cool down the steam and/or hot water, and the steam is condensed to water.

In the preferred embodiment the steam relief unit comprises the filtration element which is made of foam. Utilizing the foam as the filtration element, radically decreases cost of producing, and is easy to applicate in the steam relief unit chamber, because of resilience of the foam and therefore easy to attach therein. Advantageously the foam is impregnated with a silicone oil or lubricant. Therefore a water passes easier through the filtration element and the foam is prevented from formatting of mold.

Advantageously, the steam relief unit has the steam relief unit chamber provided with a sloping bottom surface communicated with the outlet port and placed at the lower point of the sloping bottom surface. The water that passed through the filtration element is collected on the sloping bottom surface, and because of the slope of the bottom portion, the passing water is gravitationally flow towards the outlet port.

In the preferred embodiment the steam relief unit is made of plastic and consist of an upper housing and a lower housing which are permanently connected together. Both parts can be made in the process of injection molding that's lowering the costs of producing, then after placing the filtration element inside the steam relief unit chamber, they can be permanently connected by gluing or welding, or latched mutually.

Advantageously, the steam relief unit is provided with at least one protrusion for fixing it inside in coffee machine. The steam relief unit is placed inside the coffee machine, therefore is really important to place it in right position to allow discharge the water from the steam relief unit chamber through the outlet port into the drip tray.

The coffee machine has the steam relief unit which is placed above the drip tray of the coffee machine and is communicated with drip tray therefore the water can be discharged from the steam relief unit directly to the drip tray.

Advantageously the coffee machine includes the steam relief unit that is fluidly connected through the inlet port to a heating unit via the valve. The said valve is responsible for controlling a water and/or a steam flow towards the steam relief unit. As the valve it can be utilized a multi-way valve, namely one of the section the said multi-way valve. After the coffee has been made, the residual compressed the steam or/and water still exists in the system e.g. in a heating unit of the coffee machine. The pressure coming from the residual steam and/or water maintained in the system for a long time is harmful to system components, especially for seals, therefore it is so important to release the residual steam or water from the system.

Advantageously, the above mentioned structure of the steam relieve unit, which directs the whole amount of the residual water or steam, which comes to the inlet port passes through the filtration element. The large volume of the filtration element which fills at least 50% of the steam relieve unit chamber, causes that stability of the decompression process, the reduction the noise, and reduction temperature of a decompressed steam/water is achieved. Also improved structure of the steam and shape comprising a flat surfaces allows producing it by injection molding, what decreases production costs. Further benefits and advantages of the present invention will become apparent after a careful reading of the detailed description with appropriate reference to the accompanying drawings.

In the drawings:
Fig. 1 is a perspective view of a steam relief unit in accordance with the preferred embodiment of the present invention.
Fig. 2 is an exploded perspective view of the steam relief unit as shown in Fig. 1.
Fig. 3 is cross-sectional operational view of the steam relief unit as shown in Fig. 1.

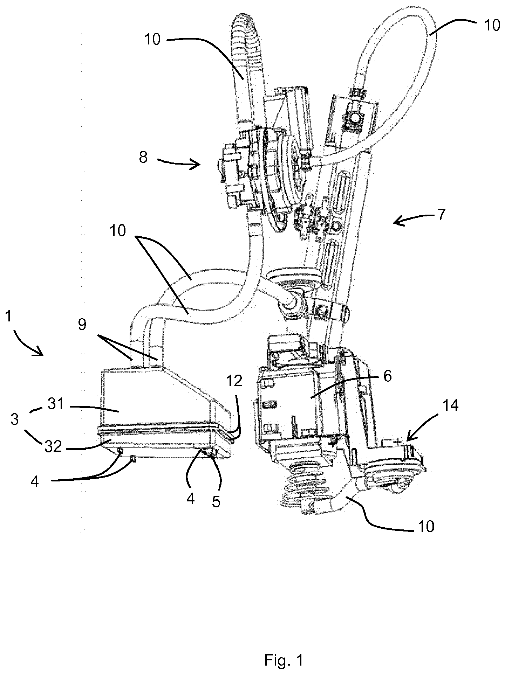

Referring to the Fig. 1 a steam relief unit 1 in accordance with the preferred embodiment of the present invention comprises a closed housing 3, composed of an upper housing 31 and a lower housing 32 with and an outlet port 5, and defining a steam relief unit chamber 2 (not shown on this figure). The lower housing 32 has a sloping bottom surface 13 (not shown on this figure), inclined towards the outlet port 5. Therefore a water that collected on the bottom surface 13 flows down into the outlet port 5 by gravity. The steam relief unit 1 is placed inside a body of the coffee machine above a drip tray (not shown on this figure) both fluidly communicated, therefore the water that leaves the steam relief unit 1 goes directly to the drip tray. Usually the drip tray has the form of a removable drawer, and collected water can be easily removed. Both portions of the housing 3 are permanently connected together along rims 12, which are formed circumferentially along the opened edges of the upper housing 31 and the lower housing 32. Said rims 12 stiffen the housing 3 and strengthen the connection between the upper housing 31 and the lower housing 32. The steam relief unit 1 is formed in the shape of truncated prism with substantially flat a bottom and a top portion provided with sloping portion, and vertically arranged four side walls. The top portion of the housing 3 is equipped with two inlet ports 9 which are fluidly connected to a steam relief unit chamber 2 (not shown on this figure) and a first of them is connected to the heating unit 7 via a multiway valve 8 by a fluid duct 10, and a second inlet port 9 is connected to a pump 6 and further connected to the water tank port 14. The steam relief unit chamber 2 is equipped with a filtration element 11 (not shown on this figure). After the coffee has been made the water or steam still residues in a heating unit 7 due to be closed by a multi-way valve 8. Therefore in the next step of functioning of the coffee machine, the multi-way valve 8 opens connection between the heating unit 7 and the steam relief unit 1 via fluid ducts 10. Fluid ducts 10 are made as flexible pipe resistant to the pressure and the temperature at least 150 degrees Celsius. The flexibility of the fluid ducts 10 gives more possibilities of arranging the interior of the coffee machine.

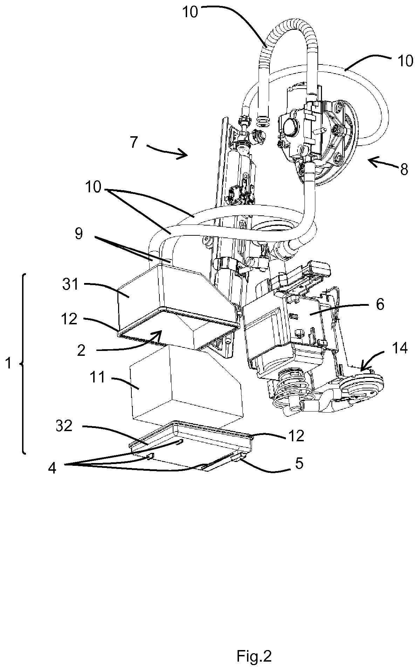

Referring to the Fig. 2 the steam relief unit 1 in accordance with the preferred embodiment of the present invention comprises the closed housing 3, composed of the upper housing 31 and the lower housing 32 with and the outlet port 5, and defining the steam relief unit chamber 2. The lower housing 32 has the sloping bottom surface 13 (not shown on this figure), inclined towards the outlet port 5. Therefore a water that collected on the bottom surface 13 flows down into the outlet port 5 by gravity. The steam relief unit 1 is placed inside the body of the coffee machine above a drip tray (not shown on this figure) both fluidly connected, therefore the water that leaves the steam relief unit 1 goes to the drip tray. Usually the drip tray has the form of a removable drawer, and collected water can be easily removed. Both portions of the housing 3 are permanently connected together along rims 12. The rims 12 are formed circumferentially along the opened edges of the upper housing 31 and the lower housing 32. Said rims 12 stiffen the housing 3 and strengthen the connection between the upper housing 31 and the lower housing 32. The steam relief unit 1 is formed in the shape of truncated prism with substantially flat a bottom and a top portion provided with sloping portion, and vertically arranged four side walls. The upper housing 31 is in a form of a truncated rectangular dome with recess, as a portion of the steam relief unit chamber 2, for receiving the filtration element 11 which is made of a silicone impregnated foam. The filtration element 11 fills the full volume of the steam relief unit chamber 2. The top portion of the housing 3 is equipped with two inlet ports 9 which are fluidly connected to the steam relief unit chamber 2, and a first of them is connected to the heating unit 7 via a multiway valve 8 by a fluid duct 10, and a second inlet port 9 is connected to a pump 6, which is further connected to a water tank port 14 to deliver fresh water to the system. In any cross section through the steam relief unit chamber 2, the filtration element 11 covers the whole cross-section of a flow path which extends from the inlet port 9 towards the outlet port 5. Therefore the full amount of the water or steam delivered into the steam relief unit chamber 2, goes through the filtration element 11. After the coffee has been made the water or the steam still residues in a heating unit 7 due to closing by a multi-way valve 8. Therefore in the next step of functioning of the coffee machine, the multi-way valve 8 opens connection between the heating unit 7 and the steam relief unit 1 via fluid ducts 10, therefore the residual a water or/and a steam can flow to the steam relief unit 1. The fluid ducts 10 are made as flexible pipe resistant to the pressure and the temperature at least 150 degrees Celsius. The flexibility of the fluid ducts 10 gives more possibilities of arranging the interior of the coffee machine.

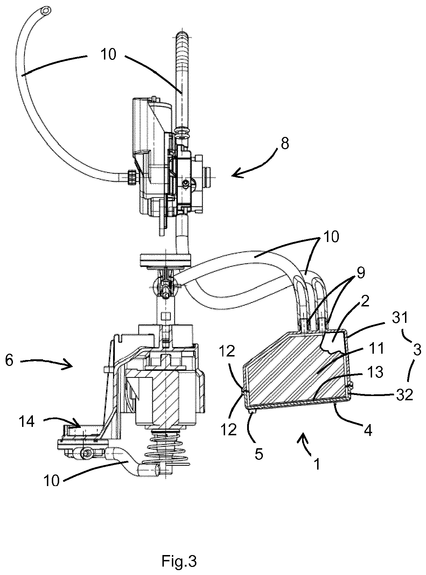

Referring to the Fig. 3 the steam relief unit 1 in accordance with the preferred embodiment of the present invention comprises the closed housing 3, composed of the upper housing 31 and the lower housing 32 defining the steam relief unit chamber 2. The steam relief unit 1 is placed inside the body of the coffee machine above the drip tray (not shown on this figure) both fluidly communicated, therefore the water that leaves the steam relief unit 1 goes to the drip tray. Usually the drip tray has the form of a removable drawer, then collected water can be easily removed. Both portions of the housing 3 are permanently connected together along the rims 12. The rims 12 are formed circumferentially along the opened edges of the upper housing 31 and the lower housing 32. Said rims 12 stiffen the housing 3 and strengthen the connection between the upper housing 31 and the lower housing 32. The steam relief unit 1 is formed in the shape of truncated prism with substantially flat a bottom portion and a top portion partially provided with sloping portion, and vertically arranged four side walls. The upper housing 31 is in a form of the trucated rectangular dome with the recess, as a portion of the steam relief unit chamber 2 for receiving the filtration element 11. The lower housing 32 is in the form of the shallow tray or pan with slopping the bottom surface 13, inclined towards the outlet port 5. Therefore a water that collected on the bottom surface 13 flows down into the outlet port 5 by gravity. The filtration element 11 is made of a silicone impregnated foam and fills the full volume of the steam relief unit chamber 2. The top portion of the housing 3 is equipped with two inlet ports 9 which are fluidly communicated with the steam relief unit chamber 2, and the first of them is connected to the heating unit 7 via a multiway valve 8 by a fluid duct 10, and the second one inlet port 9 is connected to the pump 6 by an another fluid duct 10. In any cross section through the steam relief unit chamber 2, the filtration element 11 covers the whole cross-section of the flow path which extends from the inlet port 9 towards the outlet port 5. Therefore the full amount of the water and/or steam delivered into the steam relief unit chamber 2, goes through the filtration element 11. After the coffee has been made the water or the steam still residues in the heating unit 7 due to be closed by a multi-way valve 8. Therefore in the next step of functioning of the coffee machine, the multi-way valve 8 opens connection between the heating unit 7 and the steam relief unit 1 via fluid ducts 10, in that way the residual a water or/and a steam can flow to the steam relief unit 1. Fluid ducts 10 are made as flexible pipe resistant to the pressure and the temperature at least 150 degrees Celsius. The flexibility of the fluid ducts 10 gives more possibilities of arranging the interior of the coffee machine.

Although the invention has been explained in relation to its preferred embodiment as mentioned above, it is to be understood that many other possible modifications and variations can be made without departing from the scope of the claims.

### List of reference of signs

1 steam relief unit
2 steam relief unit chamber
3 housing
31 upper housing
32 lower housing
4 protrusion
5 outlet port
6 pump
7 heating unit
8 valve
9 Inlet port
10 fluid duct
11 filtration element
12 rim
13 bottom surface
14 water tank port

## Claims

1. Coffee machine which includes a steam relief unit (1), comprising
- a closed housing (3) defining a steam relief unit chamber (2),
- at least one water and/or steam inlet port (9) and at least one water outlet port (5) which are each formed on the housing (3) and communicate with the steam relief unit chamber (2),
- a filtration element (11) arranged in the steam relief unit chamber (2) in between the inlet port (9) and the outlet port (5), and
- a water or/and steam flow path extending between the inlet port (9) and the water outlet port (5), passing through the filtration element (11),
wherein the steam relief unit chamber (2) is filled in at least 50% of its volume by the filtration element (11), and at least in one cross section of the steam relief unit chamber (2), the filtration element (11) covers the whole cross-section of the flow path,
wherein the outlet port (5) is communicated with a drip tray of the coffee machine.

2. The coffee machine according to claim 1 whereby the inlet port (9) is fluidly connected to a heating unit (7) via the valve (8), wherein the valve (8) is responsible for controlling a water and/or a steam flow towards the steam relief unit (1).

3. The coffee machine according to claim 1 or 2, wherein the filtration element (11) covers whole the volume of the steam relief unit chamber (2).

4. The coffee machine according to any of preceding claims, wherein the filtration element (11) is made of a porous material.

5. The coffee machine according to claim 4, wherein the filtration element (11) is made of a foam.

6. The coffee machine according to claim 5, wherein the filtration element (11) is made of a silicone impregnated foam.

7. The coffee machine according to any of preceding claims, wherein the steam relief unit chamber (2) has a sloping bottom surface (13) communicated with the outlet port (5) at the lower point of the sloping bottom surface (13).

8. The coffee machine according to any of preceding claims, **characterized in that** the housing (3) is made of plastic and consist of an upper housing (31) and a lower housing (32) which are permanently connected together.

9. The coffee machine according to any of preceding claims, **characterized in that** the housing (3) is disposed with at least one protrusion (4) for fixing it inside in the coffee machine.

## Patentansprüche

1. Kaffeemaschine, die eine Dampfablasseinheit (1) aufweist, mit Folgendem:
- einem geschlossenen Gehäuse (3), das eine Kammer (2) der Dampfablasseinheit definiert,
- mindestens einem Wasser- und/oder Dampfeinlass (9) und mindestens einem Wasserauslass (5), die jeweils an dem Gehäuse (3) ausgebildet sind und mit der Kammer (2) der Dampfablasseinheit in Verbindung stehen,
- einem Filterelement (11), das zwischen dem Einlass (9) und dem Auslass (5) in der Kammer (2) der Dampfablasseinheit angeordnet ist, und
- einem Wasser- und/oder Dampfströmungsweg, der sich zwischen dem Einlass (9) und dem Wasserauslass (5) erstreckt und durch das Filterelement (11) verläuft,
wobei die Kammer (2) für die Dampfablasseinheit zu mindestens 50% ihres Volumens von dem Filterelement (11) gefüllt ist und das Filterelement (11) in mindestens einem Querschnitt der Kammer (2) der Dampfablasseinheit den gesamten Querschnitt des Strömungswegs ausmacht,
wobei der Auslass (5) mit einer Abtropfschale der Kaffeemaschine verbunden ist.

2. Kaffeemaschine nach Anspruch 1, wobei der Einlass (9) über das Ventil (8) mit einer Heizeinheit (7) fluidverbunden ist, wobei das Ventil (8) für das Regeln einer Wasser- und/oder einer Dampfströmung zur Dampfablasseinheit (1) zuständig ist.

3. Kaffeemaschine nach Anspruch 1 oder 2, wobei das Filterelement (11) das gesamte Volumen der Kammer (2) der Dampfablasseinheit ausmacht.

4. Kaffeemaschine nach einem der vorhergehenden Ansprüche, wobei das Filterelement (11) aus einem porösen Material hergestellt ist.

5. Kaffeemaschine nach Anspruch 4, wobei das Filterelement (11) aus einem Schaumstoff hergestellt ist.

6. Kaffeemaschine nach Anspruch 5, wobei das Filterelement (11) aus einem mit Silikon imprägnierten Schaumstoff hergestellt ist.

7. Kaffeemaschine nach einem der vorhergehenden Ansprüche, wobei die Kammer (2) der Dampfablasseinheit eine geneigte Bodenfläche (13) aufweist, die an ihrer tieferliegenden Stelle mit dem Auslass (5) verbunden ist.

8. Kaffeemaschine nach einem der vorhergehenden Ansprüche, **dadurch gekennzeichnet, dass** das Gehäuse (3) aus Kunststoff hergestellt ist und aus einem Gehäuseoberteil (31) und einem Gehäuseunterteil (32) besteht, die dauerhaft miteinander verbunden sind.

9. Kaffeemaschine nach einem der vorhergehenden Ansprüche, **dadurch gekennzeichnet, dass** das Gehäuse (3) mit mindestens einem Vorsprung (4) versehen ist, mit dem es sich in der Kaffeemaschine fixieren lässt.

## Revendications

1. Machine à café qui inclut une unité de décharge de vapeur (1), comprenant :
- un boîtier fermé (3) délimitant une chambre d'unité de décharge de vapeur (2),
- au moins un orifice d'entrée d'eau et/ou de vapeur (9) et au moins un orifice de sortie d'eau (5) qui sont formés chacun sur le boîtier (3) et communiquent avec la chambre d'unité de décharge de vapeur (2),
- un élément de filtration (11) agencé dans la chambre d'unité de décharge de vapeur (2) entre l'orifice d'entrée (9) et l'orifice de sortie (5), et
- un trajet d'écoulement d'eau et/ou de vapeur s'étendant entre l'orifice d'entrée (9) et l'orifice de sortie d'eau (5), passant à travers l'élément de filtration (11),
dans laquelle la chambre d'unité de décharge de vapeur (2) est remplie dans au moins 50 % de son volume par l'élément de filtration (11), et au moins dans une section transversale de la chambre d'unité de décharge de vapeur (2), l'élément de filtration (11) recouvre la section transversale entière du trajet d'écoulement, et
dans laquelle l'orifice de sortie (5) est en communication avec un plateau d'égouttage de la machine à café.

2. Machine à café selon la revendication 1, où l'orifice d'entrée (9) est connecté fluidiquement à un dispositif de chauffage (7) via la soupape (8), dans laquelle la soupape (8) assure la commande d'un écoulement d'eau et/ou de vapeur vers l'unité de décharge de vapeur (1).

3. Machine à café selon la revendication 1 ou 2, dans laquelle l'élément de filtration (11) recouvre la totalité du volume de la chambre d'unité de décharge de vapeur (2).

4. Machine à café selon l'une quelconque des revendications précédentes, dans laquelle l'élément de filtration (11) est constitué d'un matériau poreux.

5. Machine à café selon la revendication 4, dans laquelle l'élément de filtration (11) est constitué d'une mousse.

6. Machine à café selon la revendication 5, dans laquelle l'élément de filtration (11) est constitué d'une mousse imprégnée de silicone.

7. Machine à café selon l'une quelconque des revendications précédentes, dans laquelle la chambre d'unité de décharge de vapeur (2) présente une surface de fond inclinée (13) en communication avec l'orifice de sortie (5) au point bas de la surface de fond inclinée (13).

8. Machine à café selon l'une quelconque des revendications précédentes, **caractérisée en ce que** le boîtier (3) est constitué de matière plastique et est composé d'un boîtier supérieur (31) et d'un boîtier inférieur (32) qui sont reliés ensemble en permanence.

9. Machine à café selon l'une quelconque des revendications précédentes, **caractérisée en ce que** le boîtier (3) est pourvu d'une partie saillante (4) pour le fixer à l'intérieur de la machine à café.
